# EUROPÄISCHE PATENTSCHRIFT

(11) **EP 3 671 034 B1**
(45) Veröffentlichungstag und Bekanntmachung des Hinweises auf die Patenterteilung: **27.04.2022**
(21) Anmeldenummer: 19216880.5
(22) Anmeldetag: 17.12.2019
(51) Int. Cl.: F21V 23/04, F21L 4/00, H05B 33/08, F21Y 115/10

(54) **REGELBARE LAMPE**
ADJUSTABLE LAMP
LAMPE RÉGLABLE

(30) Priorität: 21.12.2018 DE 102018133305; 24.06.2019 DE 102019116983; 24.06.2019 DE 102019116987; 12.07.2019 DE 202019103843 U; 21.12.2018 EP 18215033; 24.06.2019 EP 19181946; 12.07.2019 EP 19185966
(43) Veröffentlichungstag der Anmeldung: 24.06.2020
(73) Patentinhaber: A1 Mobile Light Technology GmbH, 71711 Steinheim an der Murr (DE)
(72) Erfinder: TAVOSANIS, Vittorio S., 71711 Steinheim an der Murr (DE); TAVOSANIS, Tess, 74076 Heilbronn (DE); TAVOSANIS, Daniel, 70176 Stuttgart (DE)
(74) Vertreter: Jeck, Anton

(56) Entgegenhaltungen:
- WO-A1-2017/192911
- DE-A1-102015 113 338
- JP-A- 2009 083 835
- US-A1- 2004 114 921

## Beschreibung

Die vorliegende Erfindung betrifft eine Handleuchte gemäß dem Oberbegriff des Anspruchs 1, ein Leuchtmittel für eine Handleuchte gemäß dem Oberbegriff des Anspruchs 12 sowie ein Verfahren zum distanzabhängigen Beleuchten gemäß dem Oberbegriff des Anspruchs 13.

Bei einer solchen Handleuchte sind mindestens zwei elektrisch betriebene Leuchtmittel vorgesehen.

Die stetige Weiterentwicklung von Handleuchten führt zu immer neuen Möglichkeiten der Ausleuchtung. Es besteht das andauernde Bedürfnis, eine möglichst hohe Lichtausbeute zielgerichtet auf ein gewünschtes Objekt zu richten. Gängige portable Handleuchten haben zum einen den Nachteil, dass sie nur umständlich auf ein Objekt gerichtet werden können, wenn die portable Handleuchte auf einer Oberfläche abgelegt wird, um die Hände für eine Tätigkeit freizuhalten. Zum anderen besteht bei Handleuchten mit besonders hoher Lichtausbeute die Gefahr, dass der Verwender eine Blendung durch das Leuchtmittel erfährt, da die Leuchtkraft der Leuchtmittel mittlerweile bereits netzhautschädigende Werte erreicht. Aus der DE 10 2015 113338 A1 ist eine Operationsleuchte bekannt, welche mit einer Vielzahl von abstandsabhängig abschaltbare Einzelleuchten ausgebildet ist. Die US 2004/0114921 A1 lehrt einen Autoscheinwerfer welcher eine Vielzahl von einzelansteuerbaren Dioden aufweist, wobei diese ab- und angeschaltet werden jenach dem ob sie momentan ausgerichtet sind eine Oberfläche in einem bestimmten Abstand zu beleuchten. Die WO 2017/192911 A1 beschreibt eine Handleuchte mit mindestens einem elektrisch betriebenen Leuchtmittel und einen Distanzmesser, der den Abstand von dem Distanzmesser zu einem Objekt bestimmt.

Der vorliegenden Erfindung liegt daher die **Aufgabe** zugrunde, eine Handleuchte anzugeben, die den Anwender beispielsweise beim Einstellen der Ausleuchtung vor einer Verletzung durch das abgestrahlte Licht des Leuchtmittels schützt. Erfindungsgemäß wird die Aufgabe durch eine Handleuchte mit den kennzeichnenden Merkmalen des Anspruchs 1 gelöst.

Aus technischen Gründen kann das Dimmen eines Leuchtmittels nach dem Erkennen eines Abstands des Distanzmessers bzw. der Leute von einer Oberfläche mit einer Verzögerung einsetzen, weswegen bei einer rein gedimmten Handleuchte auch beim Unterschreiten eines hinterlegten Mindestabstand zu einer Oberfläche zumindest für eine kurze Zeit eine für das menschliche Auge schädliche Leuchtintensität abgestrahlt werden kann.

Um diesem technischen Nachteil des Stands der Technik entgegenzuwirken weist die erfindungsgemäße portable Handleuchte eine Kombination von Leuchtmittelabschaltung und Leuchtmitteldimmung auf. Den einzelnen Funktionen können sowohl einzelne Leuchtmittel als auch alle Leuchtmittel zugeordnet sein, wobei mittels einer Steuereinrichtung ein Teil der Leuchtmittel zur Abschaltung und ein anderer Teil der Leuchtmittel zum Dimmen ansteuerbar sein können.

Die Handleuchte weist zumindest ein Leuchtmittel auf, welches dimmbar ist und mindestens ein Leuchtmittel, welches abschaltbar ist.

Die Anzahl der sich abschaltenden Leuchtmittel kann von dem bestimmten Abstand der Handleuchte zu einer Oberfläche, insbesondere einem Gesicht abhängen. Je kürzer der Abstand, desto mehr Leuchtmittel können in dieser Situation mittels der Regeleinrichtung abschaltbar ausgebildet sein. Dadurch kann eine besonders geringe initiale Rest-Leuchtintensität der Handleuchte beim Unterschreiten bereitgestellt werden, was das Auge schützen soll, wenn man in die Handleuchte aus kurzer Distanz hineinblickt, bis der Dimmvorgang des nicht abschaltenden Leuchtmittels abgeschlossen ist. Ist der Dimmvorgang abgeschlossen, wird eines oder eine Untergruppe oder alle angeschalteten Leuchtmittel wieder für eine gewünschte Gesamtleuchtintensität (auch gedimmt, also mit verminderter Leuchtkraft gegenüber einer maximal möglichen Leuchtkraft) hinzugeschaltet. Die gewünschte Gesamtleuchtintensität kann dabei so in einer Steuereinrichtung hinterlegt sein, dass sie in Abhängigkeit von dem momentan gemessenen Abstand geringer ist als einen das Auge schädigenden Wert.

Der Vorgang des initialen Abschaltet kann grundsätzlich basierend auf einer gemessenen Abstandsänderung oder einem gemessenen Abstand erfolgen. Besonders zweckmäßig ist das Abschalten einzelner Leuchtmittel oder aller Leuchtmittel jedoch dann, wenn ein plötzlicher Abfall des Abstands durch den Distanzmesser bestimmt wird. Dies kann beispielsweise dann eintreten, wenn die Handleuchte unvermittelt jemanden ins Gesicht gehalten wird. Hierbei kann der Distanzmesser beispielsweise einen Abfall der Distanz von mehreren Metern auf wenige Zentimeter in kürzester Zeit feststellen und/oder den absoluten Abstand des Distanzmessers von der Oberfläche. Die Leuchtintensität der Handleuchte insgesamt, also aller Leuchtmittel zusammengenommen, kann dabei an den gemessenen Abstand angepasst werden.

Beispielsweise können mindestens 2 Leuchtmittel vorgesehen sein, welche zumindest abschaltend ausgebildet bzw. ansteuerbar sind, wobei beim Unterschreiten einer ersten Instanz nur ein Leuchtmittel abschaltet, und beim Unterschreiten einer zweiten Distanz, welche geringer ist als die erste Distanz auch ein weiteres/zweites Leuchtmittel. Gleichzeitig mit der ersten und/oder der zweiten bestimmten Distanz kann der Dimmvorgang eines Dritten vorgesehenen Leuchtmittels einsetzen, wobei die Restintensität des gedimmten Leuchtmittels ebenfalls von dem Abstand des Distanzmessers beziehungsweise der Handleuchte von der Oberfläche abhängen kann. Beim Unterschreiten eines Dritten Abstand des Leuchtmittels von einer Oberfläche in Leuchtrichtung kann auch das Dritte Leuchtmittel abschaltbar sein. Wenn die Gemessene Distanz direkt auf den zweiten oder dritten hinterlegten Abstand abnimmt können gleich zwei oder alle drei Leuchtmittel gleichzeitig abschaltbar sein. Dieses Prinzip lässt sich auf eine Mehrzahl von Leuchtmitteln oder Leuchtmittel-Gruppen/Untergruppen übertragen. Jedem Leuchtmittel, Leuchtmittelgruppe/Untergruppe kann eine Distanz zugeordnet sein oder zumindest kann einer Distanz eine Anzahl von Leuchtmitteln zugeordnet sein, wobei die Anzahl auch unabhängig von eine konkreten Zuordnung zu spezifischen Leuchtmitteln bestehen kann. Die Regeleinrichtung kann demnach auch aus einer Gruppe von Leuchtmitteln die abzuschaltenden Leuchtmittel auswählen und variieren, was der Lebensdauer einzelner Leuchtmittel zuträglich sein kann.

Die abschaltbaren Leuchtmittel können ebenfalls dimmbar sein. Nach einer Abschaltung eines Leuchtmittels kann dieses im Bedarfsfall mit einer verminderten Intensität wieder in Betrieb genommen sein und/oder dimmbar ansteuerbar sein.

Während das erste der mindestens zwei Leuchtmittel abschaltet, kann das zweite Leuchtmittel auch mit oder unabhängig von dem Dritten Leuchtmittel gedimmt werden. Wird dann die zweite bestimmte Distanz unterschritten, kann auch das bereits gedimmte zweite Leuchtmittel abschaltbar sein. Diese Schaltung des simultanen Dimmens und Abschaltens kann mit einer Mehrzahl von Leuchtmitteln erfolgen, wobei einzelne Leuchtmittel und/oder Gruppen von Leuchtmitteln zum Dimmen und/oder Abschalten ansteuerbar sind.

Bevorzugt weisen die einzelnen Leuchtmittel unterschiedliche Abstrahlwinkel auf, wobei bevorzugt Leuchtmittel zuerst abgeschaltet werden können, welche einen weiteren Abstrahlwinkel haben. Hierdurch kann eine Fokussierung der vorhandenen Restintensität von der Gesamtheit der noch (bei Abschaltung und/oder Dimmen) Licht aussendeten Leuchtmittel in einem Nahbereich fokussiert werden.

Dies kann eine abstandabhängige automatische Dimm- und Fokussierung bewirken. Vorzugsweise kann eine dynamische/stufenlose Anpassung der Leuchtkraft an den bestimmten Abstand erfolgen. Insbesondere kann die Handleuchte auch ausschließlich eine Dimm-Funktion aufweisen.

Die Handleuchte kann insbesondere eine mobile Handleuchte, beispielsweise eine Handleuchte, sein.

Der Distanzmesser kann grundsätzlich einteilig oder mehrteilig ausgebildet sein und mit beispielsweise einer Sende- und einer Empfangseinheit bereitgestellt sein.

Wie letztlich aufgrund der Distanzmessung des Distanzmessers die Regelung der Leuchtkraft des Leuchtmittels erfolgt, muss nicht zwingend festgelegt sein. Beispielsweise kann eine Regeleinrichtung vorgesehen sein, welche die von dem Distanzmesser bestimmte Distanz in eine entsprechende Regelung der Helligkeit, also der Leuchtkraft, des Leuchtmittels umsetzt. Hierfür können beispielsweise eine Spannung und/oder eine Stromstärke, mit welcher das Leuchtmittel betrieben wird, anpassbar sein. Dies kann insbesondere einen Einfluss auf die Ausgangsleistung des Leuchtmittels, also die Leuchtstärke beziehungsweise Helligkeit, haben. Die Regeleinrichtung kann insbesondere vorgesehen sein, die Ausgangsleistung des Leuchtmittels durch Anpassung entsprechender Parameter zu drosseln beziehungsweise die Drosselung zumindest teilweise wieder aufzuheben.

Eine entsprechende Steuer-und/oder Regeleinrichtung kann das voranstehend beschriebene Dimmen und/oder Abschalten, vorzugsweise von einzelnen Leuchtmitteln(Gruppen) bewirken. Die voranstehend genannte Steuereinrichtung kann auch eine Regeleinrichtung sein. Die erfindungsgemäß erwähnt Regeleinrichtung kann auch einer Steuereinrichtung sein. Die Regeleinrichtung kann auch eine steuernde Funktion aufweisen.

Besonders bevorzugt ist es, dass die Regeleinrichtung ausgebildet ist, die Leuchtkraft des Leuchtmittels bei höherem Abstand zu erhöhen und bei einem geringeren Abstand zu einem Objekt oder einer Oberfläche zu verringern. Vorzugsweise kann die Anpassung linear oder exponentiell zum Abstand erfolgen.

Erfindungsgemäß kann eine elektrische Energiequelle zum Betreiben des elektrischen Leuchtmittels vorgesehen sein. Die Energiequelle kann eine beliebige Energiequelle sein, welche elektrische Energie an zumindest das Leuchtmittel, vorzugsweise jedoch auch an den Distanzmesser und oder eine Regeleinrichtung, bereitstellt. Vorzugsweise handelt es sich um eine Batterie und/oder einen Akku, eine Solarbetriebene Energiequelle oder einer Energiequellen die Handbetrieben aufladbar ist.

Unter einem Verbindungselement zu einer elektrischen Energiequelle ist ein Mittel zu verstehen, welches es ermöglicht, die Handleuchte mit einer Energiequelle zu verbinden. Dies kann beispielsweise ein klassisches Stromkabel sein, welches mit den angeführten Komponenten der Handleuchte wirkverbunden sein kann.

Erfindungsgemäß kann das Leuchtmittel ein einzelnes Leuchtmittelelement oder eine Gruppe von Leuchtmittelelementen sein. Grundsätzlich können die Leuchtmittelelemente einzeln oder in Untergruppen oder insgesamt durch die Regeleinrichtung individuell ansteuerbar sein. Die Leuchtkraft der Handleuchte insgesamt kann somit beispielsweise durch Verringern der Leuchtkraft einzelner Leuchtmittelelemente, das Abschalten einzelner Leuchtmittelelemente, das Verringern der Leuchtkraft einer Untergruppe von Leuchtmittelelementen, das Abschalten einer Untergruppe von Leuchtmittelelementen oder das Verringern der Leuchtkraft der Leuchtmittelelemente insgesamt bereitgestellt sein. Eine Untergruppe kann hierbei eine Teilmenge der Gesamtheit an Leuchtmittelelementen bilden.

Die einzelnen Leuchtmittelelemente können unterschiedliche Leuchtkraft aufweisen, also beispielsweise Hochenergie- und Niedrigenergie-Leuchtmittelelemente sein. Hochenergie beziehungsweise Niedrigenergie kann insbesondere bedeuten, dass die Leuchtmittel unterschiedliche Leistung haben bzw. unterschiedlich hell leuchten. Momentan kann man von Hochenergie, insbesondere im Bereich der LED-technik, bei mehr als 3 Watt, vorzugsweise 20 Watt, besonders bevorzugt 50 oder 100 Watt Leistungsaufnahme sprechen. Von Niedrigenergie kann, insbesondere im Bereich der LED-Technik, bei einer Leistungsaufnahme von weniger als 3 Watt, vorzugsweise weniger als 0,3 Watt gesprochen werden. Mit fortschreitender Technik, kann sich die notwenige Leitungsaufnahme für effektive Leuchtmittel weiter reduzieren, weswegen auch der Übergang zwischen Hoch- und Niedrigenergie sich entsprechend, insbesondere nach unten, verschieben kann.

Besonders im Bereich von weniger als 3 Watt kann einer Schädigung des Auges vorgebeugt sein, sollte eine Person in das Leuchtmittel schauen.

Dieser Wert, vorzugsweise 0,3 Watt kann beispielhaft für einen Grenzwert stehen, welcher einzustellen sein kann, wenn sich ein Objekt (Auge) unmittelbar vor der leuchte bzw. dem Distanzmesser und/oder dem Leuchtmittel befindet.

Die Leuchtmittelelemente können alternativ oder ergänzend hierzu mit unterschiedlichen Abstrahlwinkeln beziehungsweise Abstrahlrichtungen vorgesehen sein. Dabei ist der Distanzmesser entweder so ausgerichtet, dass er in etwa im Zentrum des Leuchtkegels, welcher aus den unterschiedlichen Abstrahlwinkeln/Abstrahlrichtungen resultiert, einen Abstand misst. Abweichend hiervon kann der Distanzmesser in einer Leuchtrichtung von Leuchtmittelelementen ausgerichtet sein, in welcher etwa die meisten Leuchtmittelelemente ausgerichtet sind oder in der Richtung, in welcher die meiste Leuchtwirkung der Gesamtheit der Leuchtmittelelemente erfolgt, beispielsweise in einem ungeregelten Zustand, also beispielsweise einem Zustand, in welchem die in Leuchtmittelelemente ihre individuelle maximale Leuchtkraft haben.

Die Leuchtmittelelemente können beispielsweise als Cluster angeordnet sein und mit einem oder mehreren Kühlkörpern auf einer oder mehreren Grundplatinen verbunden sein. Die Leuchtmittelelemente können auch als Lichtquellen bezeichnet werden.

Grundsätzlich kann die Handleuchte ein Betätigungselement aufweisen, mit welchem die Handleuchte an- und ausschaltbar ist. Zwingend notwendig ist ein solches Element jedoch nicht, da die Handleuchte beispielsweise auch so ausgebildet sein kann, dass sie immer leuchtet, wenn Energie in der Energiequelle oder über das Verbindungselement zu einer elektrischen Energiequelle bereitgestellt ist.

Die Regeleinrichtung kann auch mit einer Steuereinrichtung verbunden sein, welche die Regeleinrichtung, basierend auf den gemessenen Abstandsinformationen des Distanzmessers, ansteuert und die Regeleinrichtung entsprechend regelnd in den Energiefluss zwischen Leuchtmittel und Energiequelle beziehungsweise dem Verbindungselement zu einer elektrischen Energiequelle eingreift.

Der Distanzmesser ist nicht auf eine bestimmte Ausführungsform beschränkt. Die Entfernungsmessung des Distanzmessers kann insbesondere auf einem Infrarotsignal, einer Laufzeitmessung oder einer Lasermessung beruhen. Grundsätzlich können hierbei Lichtreflexionen beziehungsweise Winkelreflexionen, insbesondere von elektromagnetischer Strahlung, bei der Bestimmung der Entfernung, also dem Abstand des Distanzmessers von einem Objekt oder einer Oberfläche, Berücksichtigung finden. Auch Ultraschall oder andere Verfahren sind grundsätzlich denkbar und sollen nicht den Grundgedanken der vorliegenden Erfindung beschränken.

Unter Leuchtkraft kann insbesondere die Ausgangsleistung eines Leuchtmittels oder einer Gruppe von Leuchtmitteln beziehungsweise der Gesamtheit an Leuchtmitteln zu verstehen sein. Sie betrifft insbesondere die Helligkeit der Strahlung beziehungsweise den Anteil an elektromagnetischer Strahlung, welcher von dem menschlichen Auge wahrnehmbar ist und/oder welche das menschliche Auge schädigen kann, soweit deren Intensität ein schädigendes Niveau erreicht. Die Leuchtkraft kann insbesondere in Watt-Leuchtleistung oder Lumen berechenbar sein. Dies kann auch Bereiche von UV- beziehungsweise IR- Strahlung umfassen.

Nach einer Weiterbildung der vorliegenden Erfindung ist es vorgesehen, dass die Leuchtmittel und/oder der Distanzmesser einstellbar sind. Die Einstellbarkeit kann beispielsweise als eine Austauschbarkeit an der Handleuchte verwirklicht sein. Die Einstellbarkeit kann auch eine Orientierung des Leuchtmittels und/oder des Distanzmessers gegenüber einem Grundkörper der Handleuchte sein. Die einzelnen Einstellbarkeitsmöglichkeiten können untereinander auch in Kombination vorgesehen sein. Grundsätzlich kann es möglich sein, an der Handleuchte Leuchtmittel und/oder Distanzmesser entsprechend den situationsadäquaten Bedürfnissen austauschbar vorzusehen, um beispielsweise Leuchtmittel mit höherer Leuchtkraft und/oder Distanzmesser mit unterschiedlicher Messreichweite vorsehen zu können.

Hierfür kann eine Aufnahme bereitgestellt sein, welche beispielsweise als Adapterverbindung ausgebildet ist, welche zum einen eine stromleitende Verbindung zwischen der elektrischen Energiequelle oder dem Verbindungselement zu der elektrischen Energiequelle und dem Leuchtmittel und/oder dem Distanzmesser bereitstellt. Zum anderen kann die Aufnahme zusätzlich oder alternativ dazu als Adapterelement fungieren, wobei die Aufnahme Leuchtmittel und/oder Distanzmesser aufnehmen kann. Hierzu kann es vorgesehen sein, dass der Distanzmesser und/oder das Leuchtmittel lösbar mit dem Grundkörper der Handleuchte verbindbar sind.

Nach der Erfindung sind mindestens zwei Leuchtmittelelemente an der Handleuchte beziehungsweise dem Leuchtmittel vorgesehen Nach einer bevorzugten Weiterbildung der vorliegenden Erfindung ist es vorgesehen, dass der Distanzmesser mit dem mindestens einen Leuchtmittel eine Einheit bildet. Hierbei kann insbesondere ein Leuchtmittel vorgesehen sein, welche aus einem oder mehreren Leuchtmittelelementen gebildet ist, wobei in Leuchtrichtung der Leuchtmittel ein Distanzmesser ausgerichtet ist, welcher einen Abstand von dem Distanzmesser beziehungsweise den Leuchtmitteln zu einer Oberfläche oder einem Objekt bestimmen kann. Die Einheit, welche einen Distanzmesser mit mindestens einem Leuchtmittel aufweisen kann, kann insbesondere eine austauschbare Einheit bilden, welche beispielsweise in der Aufnahme, welche auch als Adapterverbindung vorsehbar ist, einheitlich verbindbar sein kann. Somit kann ein Leuchtmittel mit entsprechend angepasstem oder allgemein zur Verfügung gestelltem Distanzmesser auf der Aufnahme der Handleuchte in einfacher Weise (austauschbar) anordenbar sein. Die Einheit kann insbesondere ein Leuchtmittel aufweisen, welches in Leuchtrichtung am Rand einer Leuchtmittelelementanordnung oder zwischen den einzelnen Leuchtmittelelementen einen Distanzmesser aufweist.

Über den Adapter kann die Handleuchte auch beispielsweise mit UV-Leuchtmitteln, flexiblen Leuchtschläuchen, Spiegeln oder beleuchteten Magneten versehen werden. Erfindungsgemäß ist es vorgesehen, dass die Handleuchte neben dem einen Leuchtmittel mindestens ein weiteres Leuchtmittel aufweist, welches ebenfalls mit dem Distanzmesser und der Energiequelle oder einer weiteren Energiequelle verbunden ist. Das weitere Leuchtmittel kann ein diskretes einzelnes Leuchtmittel, eine Gruppe von weiteren Leuchtmitteln und/oder ein funktional sich von dem ersten Leuchtmittel unterscheidendes zweites Leuchtmittel sein. So kann beispielsweise das erste Leuchtmittel ein einzelnes Leuchtmittelelement oder eine Gruppe von Leuchtmittelelementen aufweisen, welche beispielsweise vorrangig im sichtbaren Bereich emittieren, wohingegen das weitere Leuchtmittel ein weiteres diskretes Leuchtmittelelement oder eine weitere Gruppe von Leuchtmittelelementen ist, welche beispielsweise in einem anderen Spektralbereich des Lichts emittieren als das erste Leuchtmittel.

Nach der vorliegenden Erfindung soll der definitionsgemäße Unterschied zwischen Leuchtmittel und Leuchtmittelelement darin bestehen, dass das Leuchtmittel einen Überbegriff darstellt, unter welchen das Leuchtmittelelement fallen kann. Ein Leuchtmittel kann somit beispielsweise ein einzelnes Leuchtmittelelement oder eine Gruppe von Leuchtmittelelementen sein.

Nach einer Weiterbildung der vorliegenden Erfindung ist es vorgesehen, dass der Distanzmesser einstellbar/eingestellt ist, eine Distanz von dem jeweiligen Leuchtmittel zu der Oberfläche oder dem Objekt zu bestimmen, wobei die Leuchtkraft des Leuchtmittels entsprechend regelbar ist und wobei Informationen zu der Position des Leuchtmittels gegenüber dem Distanzmesser, vorzugsweise in der Regeleinrichtung, hinterlegbar/hinterlegt sind.

Distanzmesser und Leuchtmittel können grundsätzlich in unterschiedlichen Bereichen der Handleuchte vorgesehen sein. In diesem sowie in weiteren Fällen kann es erforderlich sein, anstelle des Abstands des Distanzmessers zu einem Objekt oder einer Oberfläche den konkreten Abstand des Leuchtmittels zu dem Objekt oder der Oberfläche zu bestimmen, sodass keine unvorteilhafte Abweichung der Leuchtintensität in einem geringeren Abstand des Leuchtmittels zu dem Objekt oder der Oberfläche bereitgestellt ist, als es für den bestrahlten Bereich zweckmäßig wäre. Beispielsweise kann sich ein Gesicht näher an dem Leuchtmittel befinden als an dem Distanzmesser. Dies kann insbesondere in einem Nahbereich des Objekts (Gesicht) von der Handleuchte zu gravierenden Abweichungen in der Distanz zwischen dem Leuchtmittel und dem Gesicht und dem Distanzmesser und dem Gesicht führen. Hierzu kann es auch zweckmäßig sein, dass der Distanzmesser in mehreren Winkein oder in diskreten Winkeln zu der Handleuchte einen oder mehrere Abstände gleichzeitig bestimmen kann.

Sofern das Gesicht im Wirkbereich des Distanzmessers vorgesehen ist, kann dieser ausgebildet sein, nicht seinen Abstand für die Regulierung des Leuchtmittels zu berücksichtigen sondern vielmehr den tatsächlichen Abstand des Objekts (Gesicht) von dem Leuchtmittel. Hierfür kann beispielsweise eine Angabe in der Regeleinrichtung oder einer Steuereinrichtung hinterlegt sein, welche die Position des Leuchtmittels gegenüber dem Distanzmesser definiert, sodass basierend auf der Information des Abstands zwischen Objekt (Gesicht) und Distanzmesser der Abstand zwischen Leuchtmittel und Distanzmesser bestimmbar ist. Entsprechend kann die Regeleinrichtung bereitgestellt sein, die Leuchtkraft des Leuchtmittels, basierend auf einem gemessenen, berechneten oder ermittelten Abstand zwischen Leuchtmittel und Objekt, zu regulieren, insbesondere zu dimmen, also die Leuchtkraft des Leuchtmittels herabzusetzen. Dies kann beispielsweise einer Schädigung der Augen eines Benutzers der Handleuchte, welcher versehentlich in das Leuchtmittel der Handleuchte blickt, vorbeugen.

Eine zweckmäßige Weiterbildung der vorliegenden Erfindung kann darin bestehen, dass eine Fassung für zumindest ein Leuchtmittel und/oder den Distanzmesser vorgesehen ist, welche mindestens einen oder mehrere Längsstege aufweist, von denen zumindest einer eine elektrische Verbindung zwischen Energiequelle und dem Leuchtmittel und/oder dem Distanzmesser bereitstellt.

Besonders zweckmäßig ist es nach einer Weiterbildung der Erfindung, dass zumindest zwei Längsstege vorgesehen sind, zwischen welchen das mindestens eine Leuchtmittel und/oder der Distanzmesser angeordnet sind und welche das Leuchtmittel und/oder den Distanzmesser zumindest teilweise umgeben.

Mindestens 2 der Längsstege können einen Rahmen bilden, welcher zumindest an einer Seite eine Öffnung aufweist, insbesondere U-förmig ausgebildet ist (der Rahmen). Bei der U-förmigen Ausbildung des Rahmens kann beispielsweise ein Grundkörper der Handleuchte an einem Ende der Längsstege vorgesehen sein, wohingegen in einem gegenüberliegenden Endbereich der Längsstege oder in einem sonstigen Bereich entlang der Längsstege das Leuchtmittel und/oder der Distanzmesser, insbesondere die Fassung für ein Leuchtmittel und/oder den Distanzmesser, vorgesehen sein kann.

Besonders bevorzugt ist es, dass endseitig an den Längsstegen, auf der Seite, die eine Öffnung aufweisen kann, also der Seite, welche vom Grundkörper beabstandet ist, die Aufnahme, welche insbesondere als Adapter ausgebildet sein kann, vorgesehen ist.

So kann die Handleuchte endseitig eine Aufnahme für ein Leuchtmittel und/oder einen Distanzmesser aufweisen, wobei Handleuchte und/oder Distanzmesser, insbesondere deren Aufnahme, Gehäuse oder Einheit, lösbar mit der Handleuchte verbunden sein können.

Die Stege können hierbei zumindest teilweise zu einer Elektrifizierung des Leuchtmittels beziehungsweise des Distanzmessers am Ende beziehungsweise in einem Endbereich der Längsstege beitragen.

Der Grundgedanke einer Aufnahme, in welche eine Handleuchte und/oder ein Distanzmesser in Form einer Einheit austauschbar aufnehmbar ist, kann auch unabhängig von den Längsstegen verwirklicht sein.

Besonders bevorzugt ist es, dass das Leuchtmittel und/oder der Distanzmesser, insbesondere in der Fassung, schwenkbar einstellbar sind (Einstellbarkeit nach Anspruch 2), wobei Leuchtmittel und/oder der Distanzmesser in ihrer Ausrichtung gegenüber der Fassung veränderbar lagerbar, insbesondere schwenkbar, sind.

Das Leuchtmittel und/oder der Distanzmesser können an dem Längssteg beziehungsweise zwischen den Längsstegen, insbesondere an oder in der U-Form, welche durch mindestens 2 Längsstege gebildet sein kann, veränderbar lagerbar sein.

Insbesondere können die Aufnahme beziehungsweise das Leuchtmittel und/oder der Distanzmesser quer zu einer Längsrichtung der Längsstege drehbar gelagert sein. Die drehbare Lagerung der Aufnahme beziehungsweise des Leuchtmittels und/oder des Distanzmessers kann hierbei mindestens 45°, vorzugsweise 90°, besonders bevorzugt 180° oder 270°, betragen. Nach einer Ausgestaltung der vorliegenden Erfindung können die Aufnahme beziehungsweise der Distanzmesser und/oder das Leuchtmittel entlang einer Achse, vorzugsweise quer einer Längsrichtung der Längsstege, frei rotierbar sein. Hierfür kann vorzugsweise ein Schleifkontakt vorgesehen sein, welcher auch während beziehungsweise nach einer Neuorientierung der Aufnahme beziehungsweise des Leuchtmittels und/oder des Distanzmessers eine Verbindung zu der Energiequelle aufrechterhalten kann.

Zwischen einem Grundkörper, welcher beispielsweise als Griff für die Handleuchte ausgebildet sein kann, und der Aufnahme beziehungsweise dem Leuchtmittel und/oder dem Distanzmesser kann zwischen den Stegen ein Freiraum gebildet sein, welcher als Sichtfenster beispielsweise zur Aufnahme einer Lupe ausgebildet sein kann.

Bevorzugt ist es vorgesehen, dass das Distanzmessgerät mit zumindest einem Leuchtmittel eine Einheit bildet, welche vorzugsweise eine eckige, eine runde, eine ovale oder eine kugelförmige Geometrie aufweist. Die Einheit kann die zuvor beschriebene Fassung sein, in welcher das mindestens eine Leuchtmittel und der Distanzmesser vorgesehen sein können.

Die Erfindung betrifft ferner ein Leuchtmittel für eine Handleuchte gemäß Anspruch 12, das Leuchtmittel aufweisend: eine Gruppe von Leuchtmittelelementen, einen in Leuchtrichtung der Leuchtmittelelemente ausgerichteten Distanzmesser (72, 73), welcher einen Abstand zwischen Leuchtmittel (30) beziehungsweise Distanzmesser (72, 73) und einer Oberfläche oder einem Objekt bestimmt und eine Regeleinrichtung, welche mit dem Distanzmesser (72, 73) in Wirkverbindung steht, die Leuchtkraft mindestens eines Leuchtmittelelements in Abhängigkeit von dem bestimmten Abstand regelt und mindestens ein zweites Leuchtmittelelement beim Unterschreiten eines festgelegten Abstands unmittelbar abschaltet, wodurch eine verminderte Restleuchtintensität des Leuchtmittels bereitgestellt ist und dass die Regeleinrichtung ausgebildet ist, nach Abschluss einer Dimmung des mindestens einen Leuchtmittelelements, das mindestens zweite Leuchtmittelelement mit angepasster Leuchtkraft bis zu einer distanzabhängigen Gesamtleuchtintensität der Leuchtmittelelemente nach der Dimmung wieder hinzuzuschalten.

In einer einfachen Ausführungsform kann das Leuchtmittel mit einem integrierten Distanzmesser ausgebildet sein, welcher seitlich zu dem Leuchtmittel angeordnet und in derselben Richtung ausgerichtet sein kann, wie das Leuchtmittel Licht abstrahlt. Das Leuchtmittel kann mit einer Fassung gebildet sein, mittels welcher das Leuchtmittel in einer Aufnahme der Handleuchte, insbesondere austauschbar, vorgesehen sein kann.

Weiterhin kann eine Ladestation vorgesehen sein, welche den Energiespeicher in der Handleuchte laden kann. Die Ladestation kann mit einer Aufnahme bereitgestellt sein, in welche zumindest ein Teil der Handleuchte einführbar und mit elektrischen Kontakten kontaktierbar ist oder induktiv über entsprechende Spulen den internen Energiespeicher lädt. An der Ladestation kann ein Bewegungsmelder und/oder ein Distanzmessgerät vorgesehen sein, welches eine Bewegung erkennt beziehungsweise in Abhängigkeit von einer Distanz zu dem Distanzmessgerät der Ladestation die Helligkeit der Handleuchte, wenn sich diese mit der Ladestation in Wirkverbindung befindet, regelt.

Die Erfindung betrifft ferner ein Verfahren gemäß Anspruch 13.

Besonders bevorzugt ist es vorgesehen, dass die Handleuchte eine Aufnahme, vorzugsweise einen Adapter für eine lösbar verbindbare Energiequelle aufweist. Hierdurch kann eine besonders einfache Integration in eine Produktserie von elektrisch betriebenen Werkzeugen erfolgen, die mit demselben Energiequellentyp, beispielsweise einem Lithiumionen-Akku, betreibbar sind.

Die Handleuchte kann auch einen Bluetooth Sender und/oder Empfänger (Funk Empfänger und/oder Sender) aufweisen, mittels welcher eine Fernsteuerung der Handleuchte ermöglicht ist.

Es kann auch vorgesehen sein, dass die Handleuchte erst bei unterschreiten einer voreingestellten Mindestdistanz, die von dem Distanzsensor bestimmt wird, angeschaltet wird.

Dies kann insbesondere bei einer Jagdsituation, in der sich der Jäger unbemerkt an das Wild heranschleichen will, von Bedeutung sein. So eine Handleuchte würde erst unmittelbar bevor das Ziel erreicht ist (z.B. wenige Meter, aber auch nur wenige Zentimeter) aufgrund der vom Sensor gemessenen Distanz das Leuchtmittel aktivieren.

Bei Unterschreiten des hinterlegten Abstand kann anstelle einer bloßen Aktivierung des Leuchtmittels auch eine Stroboskopfuktion (Stoboskop Modus), also ein hochfrequentes An- und Ausschalten von mindestens einem der Leuchtmittel, vorzugsweise aller Leuchtmittel der Leuchte, Anwendung finden. Dies kann zur Verwirrung des Jagdwilds oder im Verteidigungsfall (Polizei, Grenzsicherung,...) zur Verwirrung eines Angreifers führen. Vorzugsweise ist es vorgesehen, dass ein zweiter Abstand hinterlegbar ist. Beim Erreichen des ersten Abstands kann das Leuchtmittel aktivierbar sein und beim Erreichen des zweiten Abstands kann die Stroboskopfunktion einsetzten. Welche der beiden Abstände welche Funktion auslöst, kann frei einstellbar sein.

Die Stroboskopfunktion kann sowohl bei dem ersten oder bei dem zweiten Abstand erfolgen, wobei der erste Abstand in Leuchtrichtung größer sein kann als der zweite.

Nachfolgend wird die Erfindung anhand der beigefügten Zeichnung näher erläutert. In den Figuren zeigen:
- Figur 1: eine erste Ausführungsform der erfindungsgemäßen Handleuchte,
- Figur 2: eine erste Ausführungsform der erfindungsgemäßen Handleuchte mit geneigtem Leuchtmittel,
- Figur 3: eine zweite Ausführungsform der erfindungsgemäßen Handleuchte,
- Figur 4: die zweite Ausführungsform der erfindungsgemäßen Handleuchte mit Ladestation,
- Figur 5: eine Ausführungsform eines Leuchtmittels mit Distanzmesser in einer Seitenansicht und
- Figur 6: eine Ausführungsform eines Leuchtmittels mit Distanzmesser in einer Draufsicht.

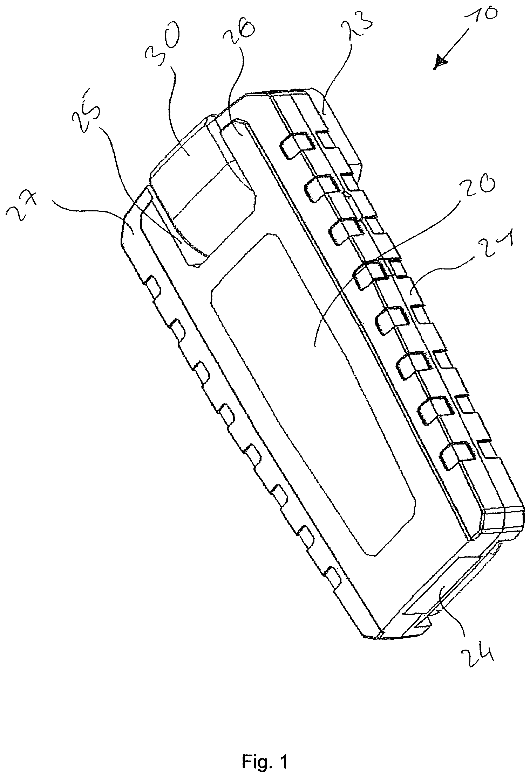

Figur 1 zeigt eine erste Ausführungsform einer erfindungsgemäßen Handleuchte 10.

Diese kann insbesondere einen Grundkörper 20 aufweisen, welcher mit den weiteren Komponenten in Wirkverbindung stehen kann. Seitlich an dem Grundkörper kann ein Griffbereich 21 angeordnet sein, welcher einen besonders festen Halt der Handleuchte ermöglicht. Auf einer Rückseite kann ein Trageclip 23 angeordnet sein, mittels welchem die Handleuchte beispielsweise an einem Gürtel angeordnet werden kann. In einem oberen Endbereich der Handleuchte ist eine U-förmige Aufnahme 25 vorgesehen, welche aus zumindest 2 Stegen 26 und 27, vorzugsweise mit dem Grundkörper 20, gebildet sein kann. In der U-förmigen Ausnehmung, welche nach oben geöffnet sein kann, ist ein Leuchtmittel 30 angeordnet, welches auch einen Distanzmesser aufweisen kann. Das Leuchtmittel und/oder der Distanzmesser können schwenkbar in der Fassung 25 vorgesehen sein.

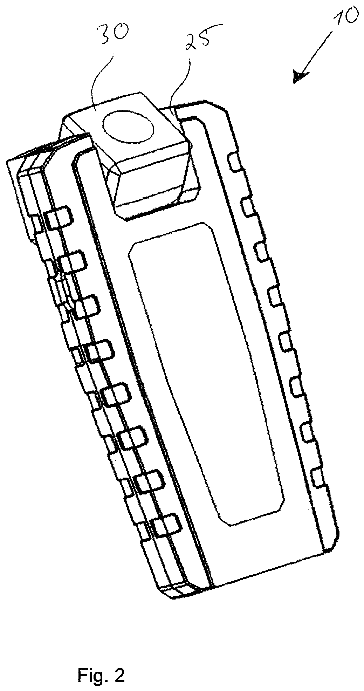

Wie insbesondere aus Figur 2 hervorgeht, können das Leuchtmittel und/oder der Distanzmesser in etwa orthogonal zu einer Längsachse der Handleuchte beziehungsweise einer Längsachse der Stege 26 und 27 vorgesehen sein. Hierdurch kann in Bezug auf den Grundkörper der Handleuchte ein variabler Abstrahlwinkel des Leuchtmittels 30 der Handleuchte vorgesehen sein. Insbesondere kann die Richtung, in welche das Leuchtmittel Licht abstrahlt, im rechten Winkel zu einer Längsachse des Grundkörpers beziehungsweise der Längsachse der Stege 26 und 27 parallel zu diesen oder in einem beliebigen dazwischenliegenden Winkel veränderbar sein.

Besonders bevorzugt sind das Leuchtmittel 30 und/oder der Distanzmesser frei um seine Achse in der Aufnahme 25 drehbar gelagert.

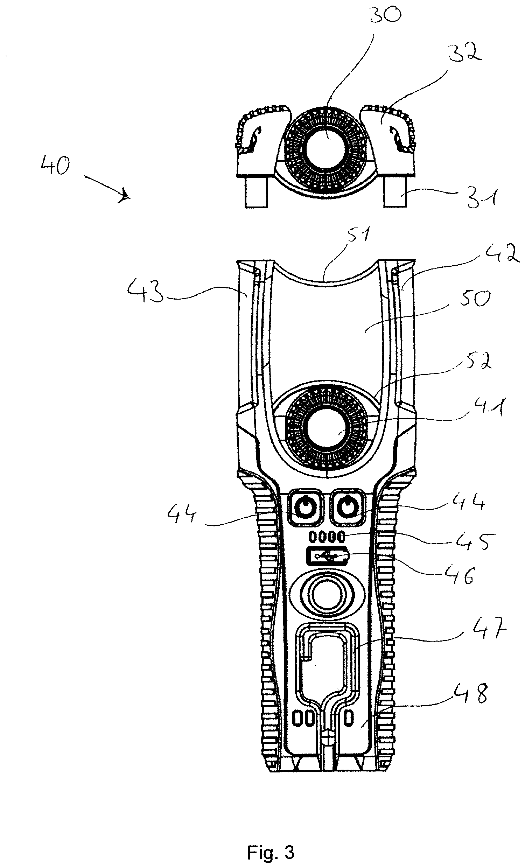

Figur 3 beschreibt eine zweite Ausführungsform der erfindungsgemäßen Handleuchte 40, welche ein erstes Leuchtmittel 30 mit oder ohne Distanzmesser aufweisen kann. Dieser kann über Adapterelemente 31 mit seitlich angeordneten Stegen 32, verbunden werden. Hierdurch ist eine Austauschbarkeit des Leuchtmittels 30 und/oder des Distanzmessers an der Handleuchte gewährleistet. Zwischen den Stegen, insbesondere zwischen dem Leuchtmittel 30 und einem Grundkörper der Handleuchte, kann ein Freiraum 50 gebildet sein, welcher beispielsweise eine Lupe aufnehmen kann. Gemäß Figur 3 ist die Lupe durch einen oberen Rand 51 beziehungsweise einen unteren Rand 52 begrenzt. Grundsätzlich kann die Lupe jedoch auch ohne eine Fassung nach oben oder unten zwischen den Stegen 42 und 43 vorgesehen sein. Der Rand 51 bildet keine Brücke zwischen den Stegen 42 und 43 und bildet somit keine Unterbrechung der vorgesehenen Form, welche die beiden Stege 42 und 43, insbesondere im Zusammenhang mit dem Grundkörper 48, bilden.

Es kann vorgesehen sein, dass zur Stabilisierung der beiden Stege 42 und 43 beziehungsweise 26 und 27 ober- oder unterhalb des Leuchtmittels 30 mit oder ohne Distanzmesser eine Querverbindung vorgesehen ist. Erfindungsgemäß ist selbst in diesem Fall von einer U-förmigen Form auszugehen. In einem Bereich zwischen Grundkörper 48 und dem Leuchtmittel 30 mit oder ohne Distanzmesser kann ein zweites Leuchtmittel mit oder ohne Distanzmesser vorgesehen sein. Grundsätzlich ist es zweckmäßig, lediglich einen Distanzmesser vorzusehen. Dieser kann jedoch Elemente aufweisen, die an unterschiedlichen Bereichen der Handleuchte angeordnet sind. So könnte beispielsweise ein erster Teil eines Distanzmessers, beispielsweise eine Sendeeinrichtung zum Senden eines akustischen oder elektromagnetischen Signals, im Bereich des Leuchtmittels 30 angeordnet sein, wohingegen ein Empfänger für das akustische oder elektromagnetische Signal von dem Element im Bereich des Leuchtmittels 30 im Bereich des Leuchtmittels 41 vorgesehen ist. Die Anordnung der beiden Elemente kann grundsätzlich auch vertauscht sein. Das weitere Leuchtmittel und/oder der Distanzmesser können auch in einem Fußbereich der Handleuchte vorgesehen sein, wobei ein Grundkörper 48 zwischen dem Leuchtmittel 30 mit oder ohne Distanzmesser und dem zweiten Leuchtmittel 41 mit oder ohne Distanzmesser vorgesehen sein kann. Außerdem kann die Handleuchte 40 ein Tastmittel 44 aufweisen, mittels welchem die Handleuchte an- und ausschaltbar ist und/oder eine Grundhelligkeit der Handleuchte und/oder eine distanzabhängige Helligkeit der Handleuchte (des Leuchtmittels/der Leuchtmittel) einstellbar sind. Im Übrigen kann die Handleuchte eine Anzeige 45 aufweisen, welche den Stand eines vorgesehenen Regiespeichers, welcher beispielsweise in dem Grundkörper 48 vorgesehen ist, anzeigt. Weiterhin kann ein Anschluss für ein Lademittel 46 vorgesehen sein, beispielsweise ein USB-Anschluss, über welchen ein Energiespeicher der Handleuchte, innerhalb der Handleuchte, aufladbar ist. Für eine ordnungsgemäße Befestigung kann ein Haken 47 vorgesehen sein, welcher vorzugsweise drehbar an dem Grundkörper 48 angebracht sein kann.

Durch die lösbare Verbindung zwischen dem Leuchtmittel 30 und den Stegen 42 und 43 über die Adapterelemente 31 kann eine Austauschbarkeit des Leuchtmittels und/oder des Distanzmessers an einem Kopfende der Handleuchte ermöglicht sein. Hierdurch kann die Handleuchte, welche im Übrigen eine weitere Leuchte aufweisen kann, bedarfsgerecht an die Bedingungen angepasst werden. Beispielsweise kann eine Leuchte geringerer oder höherer Leuchtkraft, eine Leuchte mit oder ohne Distanzmesser oder ein sonstiges mittels Elektrizität betreibbares Gerät an der Handleuchte im Kopfbereich vorgesehen sein.

Das Leuchtmittel 30 mit oder ohne Distanzmesser gemäß Figur 3 kann in einer Fassung vorgesehen sein, gegenüber welcher das Leuchtmittel und/oder der Distanzmesser drehbar gelagert sein können. Die Drehachse ist grundsätzlich beliebig, kann jedoch vorzugsweise in etwa orthogonal zu den Stegen 42 und 43 beziehungsweise quer zu einer Längsachse des Grundkörpers 48 vorgesehen sein. Besonders bevorzugt ist das Leuchtmittel mit oder ohne Distanzmesser frei in seiner Leuchtrichtung gegenüber dem Grundkörper einstellbar. Auch das zweite Leuchtmittel 41 kann mit derselben Achse wie das Leuchtmittel 30 oder mit einer anderen drehbar an der Handleuchte 40 vorgesehen sein.

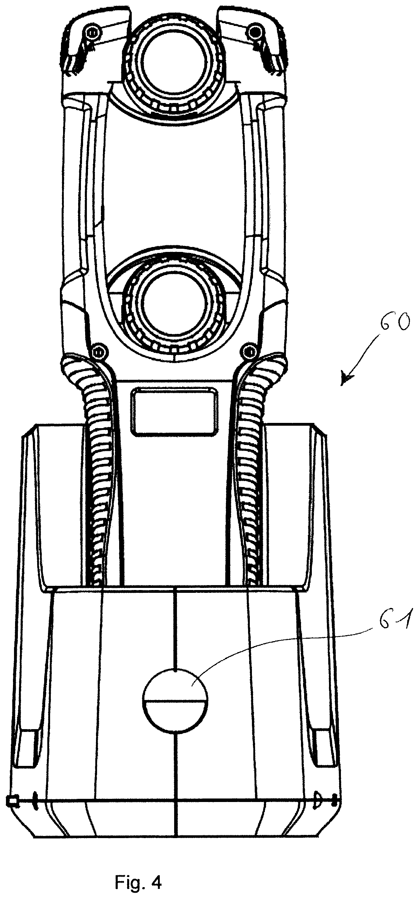

Figur 4 zeigt die zweite Ausführungsform der vorliegenden Erfindung in einem zusammengebauten Zustand zwischen Leuchtmittel 30 und/oder Distanzmesser mit dem Körper 48 über die Stege 42 und 43. Die Handleuchte an sich ist in Figur 4 in einer Ladestation 60 vorgesehen, welche über einen Mechanismus 61 verfügt, über welchen die Handleuchte betätigbar, also ein- und ausschaltbar, ist. Die Ladestation kann mit einer Dämmerungs-/oder Fotodiode zum Erkennen der Helligkeit im Umfeld bereitgestellt sein. Auch kann die Ladestation einen Distanzmesser beziehungsweise einen Bewegungsmelder aufweisen, mittels welchem die Helligkeit der Handleuchte in Abhängigkeit zur Distanz der Ladestation von einem Objekt in Leuchtrichtung der Handleuchte regelbar ist beziehungsweise in Abhängigkeit von einer Bewegung vor der Handleuchte die Handleuchte ein-und ausschaltbar ist.

Grundsätzlich sind spezielle Eigenschaften der ersten oder zweiten Ausführungsform miteinander kombinierbar oder substituierbar. Eine Festlegung auf eine der beiden Ausführungsformen ist grundsätzlich nicht im Sinne der vorliegenden Erfindung.

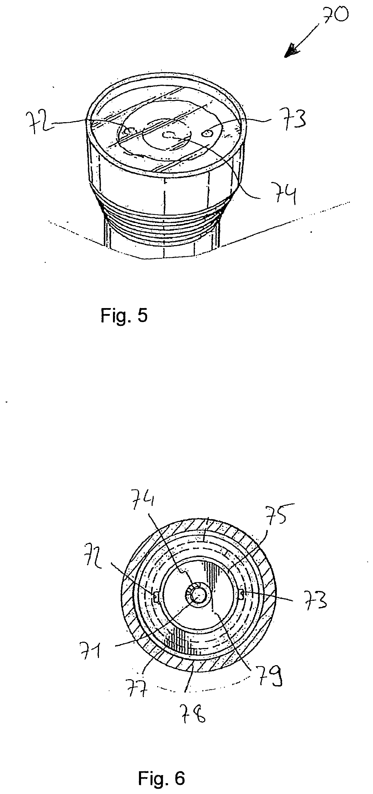

Figur 5 zeigt ein Leuchtmittel 70, welches ein Distanzmessgerät aufweist. Das Distanzmessgerät kann insbesondere mit einem Sender 72 und einem Empfänger 73 ausgebildet sein. Ein photoemittierendes Element 74 kann bereitgestellt sein, um Licht von dem Leuchtmittel zu imitieren. Der Distanzmesser kann insbesondere ausgebildet sein, mit dem Leuchtmittel beziehungsweise mit dem photoemittierenden Element so zusammenzuwirken, dass bei geringer Distanz zwischen Distanzmesser und einem Objekt oder einer Oberfläche die Leuchtkraft des Leuchtmittels beziehungsweise des photoemittierenden Elements gegenüber einer größeren Distanz zwischen Distanzmesser und einem Objekt oder einer Oberfläche reduziert wird. Die Messeinrichtungen 72 und 73 des Distanzmessers sind dabei funktional in derselben oder einer ähnlichen Richtung ausgerichtet, wie das Leuchtmittellicht abstrahlt.

Figur 6 zeigt eine Draufsicht auf eine Ausführungsform des Leuchtmittels mit einem photoemittierenden Element 74 und den Einrichtungen 72 und 73 des Distanzmessers, welcher ein Gehäuse 78 und/oder eine Linse beziehungsweise ein Glas 75 und/oder einen Reflektor 79 aufweisen kann, welche das photoemittierenden Element 74 halten und/oder einen Isolierring 77 aufweisen können.

## Patentansprüche

1. Handleuchte mit
mindestens zwei elektrisch betriebenen Leuchtmitteln (30, 41), und einen Distanzmesser (72, 73), der den Abstand von dem Distanzmesser (72, 73) zu einem Objekt oder einer Oberfläche bestimmt
**dadurch gekennzeichnet**
**dass** eine Regeleinrichtung vorgesehen ist, welche mit dem Distanzmesser (72, 73) in Wirkverbindung steht, die Leuchtkraft mindestens eines der Leuchtmittel (30) in Abhängigkeit von dem bestimmten Abstand regelt und mindestens ein zweites Leuchtmittel beim Unterschreiten eines festgelegten Abstands unmittelbar abschaltet, wodurch eine verminderte Restleuchtintensität der Handleuchte bereitgestellt ist und
**dass** die Regeleinrichtung ausgebildet ist, nach Abschluss einer Dimmung des mindestens einen Leuchtmittels (30), das mindestens zweite Leuchtmittel mit angepasster Leuchtkraft bis zu einer distanzabhängigen Gesamtleuchtintensität der Leuchtmittel (30) nach dem Ende der Dimmung wieder hinzuzuschalten, wobei ein Leuchtmittel (30, 41) ein einzelnes Leuchtmittelelement oder eine Gruppe von Leuchtmittelelementen sein kann.

2. Handleuchte nach Anspruch 1,
**dadurch gekennzeichnet,**
**dass** die Leuchtmittel (30, 41) und/oder der Distanzmesser (72, 73) einstellbar sind.

3. Handleuchte nach einem der Ansprüche 1 oder 2,
**dadurch gekennzeichnet,**
**dass** der Distanzmesser (72, 73) zumindest in einer Leuchtrichtung der Leuchtmittel (30, 41) ausgerichtet ist, den Abstand zu bestimmen.

4. Handleuchte nach einem der Ansprüche 1 bis 3,
**dadurch gekennzeichnet,**
**dass** der Distanzmesser (72, 73) und/oder das Leuchtmittel (30) lösbar mit einem Grundkörper der Handleuchte (10, 40) verbindbar sind.

5. Handleuchte nach einem der Ansprüche 1 bis 4,
**dadurch gekennzeichnet,**
**dass** der Distanzmesser (72, 73) mit dem mindestens einem Leuchtmittel (30) eine Einheit bildet.

6. Handleuchte nach einem der Ansprüche 1 bis 5,
**dadurch gekennzeichnet,**
**dass** ein Betätigungselement (44) vorgesehen ist, mittels welchem die distanzabhängige Leuchtkraft der Leuchtmittel (30, 41) einstellbar ist.

7. Handleuchte nach einem der Ansprüche 1 bis 6,
**dadurch gekennzeichnet,**
**dass** der Distanzmesser (72, 73) einstellbar/eingestellt ist, eine Distanz von dem jeweiligen Leuchtmittel (30, 41) zu der Oberfläche oder dem Objekt zu bestimmen, wobei die Leuchtkraft des Leuchtmittels (30) entsprechend dem Abstand regelbar ist und/oder wobei Informationen zu der Position des Leuchtmittels (30) gegenüber dem Distanzmesser (72, 73), vorzugsweise in der Regeleinrichtung, hinterlegbar/hinterlegt sind.

8. Handleuchte nach einem der Ansprüche 1 bis 7,
**dadurch gekennzeichnet,**
**dass** eine Fassung (32) für zumindest ein Leuchtmittel (30) und/oder den Distanzmesser (72, 73) vorgesehen ist, welche mindestens einen Längssteg (42, 43) aufweist, von welchen zumindest einer eine elektrische Verbindung zwischen Energiequelle und dem Leuchtmittel und/oder dem Distanzmesser bereitstellt.

9. Handleuchte nach einem der Ansprüche 1 bis 8,
**dadurch gekennzeichnet,**
**dass** zumindest zwei Längsstege (42, 43) vorgesehen sind, zwischen welchen mindestens ein Leuchtmittel (30) und/oder der Distanzmesser (72, 73) angeordnet sind und welche das Leuchtmittel (30) und/oder den Distanzmesser (72, 73) zumindest teilweise umgeben.

10. Handleuchte nach Anspruch 9,
**dadurch gekennzeichnet,**
**dass** der durch die Längsstege (42, 43) gebildete Rahmen an zumindest einer Seite eine Öffnung aufweist, insbesondere U-förmig ausgebildet ist.

11. Handleuchte nach einem der Ansprüche 1 bis 10,
**dadurch gekennzeichnet,**
**dass** die Handleuchte eine Aufnahme für eine lösbar verbindbare Energiequelle aufweist.

12. Leuchtmittel für eine Handleuchte,
das Leuchtmittel aufweisend:
eine Gruppe von Leuchtmittelelementen,
einen in Leuchtrichtung der Leuchtmittelelemente ausgerichteten Distanzmesser (72, 73), welcher einen Abstand zwischen Leuchtmittel (30) beziehungsweise Distanzmesser (72, 73) und einer Oberfläche oder einem Objekt bestimmt und
eine Regeleinrichtung, welche mit dem Distanzmesser (72, 73) in Wirkverbindung steht, die Leuchtkraft mindestens eines Leuchtmittelelements in Abhängigkeit von dem bestimmten Abstand regelt und mindestens ein zweites Leuchtmittelelement beim Unterschreiten eines festgelegten Abstands unmittelbar abschaltet, wodurch eine verminderte Restleuchtintensität des Leuchtmittels bereitgestellt ist und
dass die Regeleinrichtung ausgebildet ist, nach Abschluss einer Dimmung des mindestens einen Leuchtmittelelements, das mindestens zweite Leuchtmittelelement mit angepasster Leuchtkraft bis zu einer distanzabhängigen Gesamtleuchtintensität der Leuchtmittelelemente nach der Dimmung wieder hinzuzuschalten.

13. Verfahren zum adaptiven Beleuchten eines Objekts oder einer Oberfläche mittels einer Handleuchte, nach einem der Ansprüche 1 bis 11, bei welchem mittels eines Distanzmessers (72, 73) ein Abstand zwischen Distanzmesser (72, 73) und einer Oberfläche und einem Objekt bestimmt wird und der bestimmte Abstand einer Regeleinrichtung zur Verfügung gestellt wird, welche die Leuchtkraft mindestens zweier Leuchtmittel (30, 41) basierend auf dem bestimmten Abstand, regelt, in dem zumindest ein Leuchtmittel gedimmt und zumindest ein weiteres Leuchtmittel unmittelbar abgeschalten wird, wodurch zunächst eine verminderte Restleuchtintensität der Handleuchte bereitgestellt wird und dass die Regeleinrichtung nach Abschluss der Dimmung des mindestens einen Leuchtmittels, das mindestens zweite Leuchtmittel mit angepasster Leuchtkraft bis zu einer distanzabhängigen Gesamtleuchtintensität der Leuchtmittel nach dem Ende der Dimmung wieder hinzuschaltet.

## Claims

1. Torch with
at least two electrically operated light sources (30, 41), and a distance meter (72, 73) which measures the distance from the distance meter (72, 73) to an object or surface
**characterised in that**
a regulating device is provided which is operatively connected to the distance meter (72, 73), which regulates the luminosity of at least one of the light sources (30) as a function of a defined distance and switches off at least a second luminous means immediately when the distance falls below the defined distance, as a result of which a reduced residual luminosity of the torch is provided and
**in that** the control device is designed, to provide after the end of a dimming process of the at least one light sources (30), to switch on the at least second light sources again with adapted luminosity up to a distance-dependent total luminosity of the light sources (30) after the end of the dimming, wherein the light sources (30, 41) can be a single illuminant element or a group of illuminant elements.

2. Torch according to claim 1,
**characterised in that**
that the light sources (30, 41) and/or the distance meter (72, 73) are adjustable.

3. Torch according to one of the claims 1 or 2,
**characterised in that**
**in that** the distance meter (72, 73) is aligned at least in an illuminating direction of the light sources (30, 41) to determine the distance.

4. Torch according to one of the claims 1 to 3,
**characterised in that**
**in that** the distance meter (72, 73) and/or the light sources (30) can be detachably connected to a base body of the torch (10, 40).

5. Torch according to one of the claims 1 to 4,
**characterised in that**
**in that** the distance meter (72, 73) forms a unit with the at least one light sources (30).

6. Torch according to any one of claims 1 to 5,
**characterised in that**
**in that** an actuating element (44) is provided by means of which the distance-dependent luminosity of the illuminating means (30, 41) can be adjusted.

7. Torch according to any one of claims 1 to 6,
**characterised in that**
**in that** the distance meter (72, 73) can be set/is set to determine a distance from the respective light sources (30, 41) to the surface or the object, it being possible to regulate the luminosity of the light sources (30) in accordance with the distance and/or it being possible for information about the position of the light sources (30) with respect to the distance meter (72, 73) to be stored/stored, preferably in the regulating device.

8. Torch according to any one of claims 1 to 7,
**characterised in that**
that a socket (32) for at least one light sources (30) and/or the distance meter (72, 73) is provided, which has at least one longitudinal web (42, 43), at least one of which provides an electrical connection between the energy source and the light sources and/or the distance meter.

9. Torch according to any one of claims 1 to 8,
**characterised in that**
**in that** at least two longitudinal webs (42, 43) are provided, between which at least one light sources (30) and/or the distance meter (72, 73) are arranged and which at least partially surround the light sources (30) and/or the distance meter (72, 73).

10. Torch according to claim 9,
**characterised in that**
**in that** the frame formed by the longitudinal webs (42, 43) has an opening on at least one side, in particular is U-shaped.

11. Torch according to any one of claims 1 to 10,
**characterised in that**
that the hand lamp has a receptacle for a detachably connectable energy source.

12. Light sources for a hand lamp, comprising:
a group of light source elements,
a distance meter (72, 73) aligned in the direction of illumination of the light sources elements, which determines a distance between the light source (30) or distance meter (72, 73) and a surface or an object, and
a control device, which is operatively connected to the distance meter (72, 73), controls the luminosity of at least one light source element as a function of the determined distance and switches off at least a second light sources element immediately when the distance falls below a predetermined distance, as a result of which a reduced residual luminosity of the light source element is provided, and
in that the control device is designed, after completion of a dimming of the at least one light source element, to switch on the at least second light source element again with adapted luminosity up to a distance-dependent total luminosity of the light source elements after the dimming.

13. Method of adaptively illuminating an object or surface by means of a torch, according to any one of claims 1 to 11,
whereby a distance between the distance meter (72, 73) and a surface and an object is determined by means of a distance meter (72, 73) and the determined distance is made available to a control device which controls the luminosity of at least two light sources on the basis of the determined distance, in which at least one light sources is dimmed and at least one further light source is switched off immediately, as a result of which initially a reduced residual luminosity of the hand lamp is provided, and
in that, after the dimming of the at least one light source (30) has ended, the control device switches the at least second light source back on with adapted luminosity up to a distance-dependent total luminous intensity of the light sources wafter the end of the dimming.

## Revendications

1. Lampe torche munie de deux sources lumineuses (30,41) exploitées électriquement et d'un dispositif de mesure de distance (72,73) qui détermine la distance entre le dispositif de mesure de distance (72,73) en direction d'un objet ou d'une surface caractérisée de sorte qu'un système régulateur est prévu se trouvant en liaison coopérante avec le dispositif de mesure de distance (72,73) réglant la luminosité d'au minimum de l'une des sources lumineuses (30) en dépendance de la distance donnée et arrêtant directement au minimum une deuxième source lumineuse en étant inférieure à une distance donnée par laquelle une intensité lumineuse résiduelle réduite de la lampe torche est prévue de sorte que le système régulateur est formé de sorte qu'au minimum la deuxième source lumineuse après achèvement d'une gradation d'au minimum une source lumineuse (30) avec une force lumineuse adaptée est effectuée jusqu'une intensité lumineuse totale dépendamment de la distance des sources lumineuses (30) à la fin de la gradation où une source lumineuse (30,41) pourrait être un élément de source lumineuse individuel ou le cas échéant un groupe d'éléments de source lumineuse.

2. Lampe torche selon la revendication 1 est caractérisée de sorte que les sources lumineuses (30,41) et/ou les dispositifs de mesure de distance (72,73) sont réglables.

3. Lampe torche selon la revendication 1 ou 2 est caractérisée de sorte que le dispositif de mesure de distance (72,73) est orienté au minimum dans une direction du fasiceau des sources lumineuses (30,41) déterminant la distance.

4. Lampe torche selon la revendication 1 jusqu'à 3 est caractérisée de sorte que le dispositif de mesure de distance (72,73) et/ou les sources lumineuses (30) sont reliés de manière amovible au corps de base de la lampe torche (10,40).

5. Lampe torche selon la revendication 1 jusqu'à 4 est caractérisée de sorte que le dispositif de mesure de distance (72,73) constitue un élément unitaire avec au minimum une source lumineuse (30).

6. Lampe torche selon la revendication 1 jusqu'à 5 est caractérisée de sorte qu'un élément d'actionnement (44) est prévu par le biais duquel la force lumineuse des sources lumineuses (30,41) est réglable dépendamment de la distance.

7. Lampe torche selon la revendication 1 jusqu'à 6 est caractérisée de sorte que le dispositif de mesure de distance (72,73) est réglable/est réglé pour déterminer la distance entre la source lumineuse respective (30,41) en direction de la surface ou vers l'objet où la force de luminosité de la source lumineuse (30) est réglable dépendamment de la distance et/ou où des informations relatives à la position des sources lumineuses (30) sont déposables/sont déposées vis-à-vis du dispositif de mesure de distance (72,73) de préférence au sein du système régulateur.

8. Lampe torche selon la revendication 1 jusqu'à 7 est caractérisée de sorte qu'une douille (32) est prévue pour au minimum une source lumineuse (30) et/ou le dispositif de mesure de distance (72,73) est prévu présentant au minimum une nervure longitudinale (42,43) fournissant au minimum une liaison électrique entre la source d'énergie et la source lumineuse et/ou le dispositif de mesure de distance.

9. Lampe torche selon la revendication 1 jusqu'à 8 est caractérisée de sorte qu'au minimum deux nervures longitudinales (42,43) sont prévues où au minimum une source lumineuse (30) et/ou le dispositif de mesure de distance (72,73) sont disposés entourant au minimum et à titre partiel la source lumineuse (30) et/ou le dispositif de mesure de distance (72,73).

10. Lampe torche selon la revendication 9 est caractérisée de sorte que le cadre formé par les nervures longitudinales (42,43) présente au minimum une ouverture sur un côté et notamment formée en forme de U.

11. Lampe torche selon la revendication 1 jusqu'à 10 est caractérisée de sorte que la lampe torche présente un levé pour une source d'énergie raccordable d'une manière détachable.

12. Source lumineuse pour une lampe torche présentant : un groupe d'éléments de sources lumineuses, un dispositif de mesure de distance (72,73) orienté vers la direction du faciseau des éléments de sources lumineuses déterminant la distance entre la source lumineuse (30) et le cas échéant le dispositif de mesure de distance (72,73) et une surface ou un objet et un système régulateur se trouvant en liaison coopérante avec le dispositif de mesure de distance (72,73), réglant la force de luminosité d'au minimum un élément de source lumineuse dépendamment de la distance donnée et coupant directement au minimum un deuxième élément de source lumineuse de manière inférieure de cette distance donnée par le biais de laquelle une intensité lumineuse résiduelle réduite de l'élément de la source lumineuse est fournie et que le système régulateur est formé de sorte que le deuxième élément de la source lumineuse au minimum à l'achèvement de la gradation au minimum de l'élément de la source lumineuse via la force de luminosité adaptée se mette en marche en direction de la densité lumineuse totale des éléments de la source lumineuse dépendamment de la distance donnée.

13. Procédé d'éclairage adaptif d'un objet ou d'une surface par le biais d'une lampe torche selon la revendication 1 jusqu'à 11 dans laquelle une distance entre le dispositif de mesure de distance (72,73) et une surface et un objet est déterminée par le biais du dispositif de mesure de distance (72,73) et la distance donnée d'un système régulateur est mis à disposition réglant la force de luminosité d'au minimum deux éléments de sources lumineuses (30,41) basé sur une distance donnée où au minimum une source lumineuse est tamisée et au minimum un élément de source lumineuse additionnel est mis hors marche directement par le biais duquel en premier lieu une intensité lumineuse résiduelle réduite de la lampe torche est fournie et que le système régulateur à l'achèvement du tamisage d'au minimum un élément de source lumineuse d'au minimum du deuxième élément de source lumineuse est coupé grâce à la force lumineuse adaptée jusqu'à une intensité lumineuse totale dépendamment de la distance des sources lumineuses et ce à l'achèvement du tamisage.
